(19) Europäisches Patentamt / European Patent Office / Office européen des brevets

(11) **EP 1 763 876 B1**

(12) **EUROPEAN PATENT SPECIFICATION**

(45) Date of publication and mention
of the grant of the patent:
**28.05.2008 Bulletin 2008/22**

(21) Application number: **05751695.7**

(22) Date of filing: **22.06.2005**

(51) Int Cl.:
*G11B 7/09* *(2006.01)*    *G11B 7/13* *(2006.01)*

(86) International application number:
**PCT/IB2005/052043**

(87) International publication number:
**WO 2006/003549 (12.01.2006 Gazette 2006/02)**

(54) **METHOD AND SYSTEM FOR GENERATING A SPHERICAL ABERRATION SIGNAL ERROR**

VERFAHREN UND SYSTEM ZUR ERZEUGUNG VON SPHÄRISCHEN
ABERRATIONSSIGNALFEHLERN

PROCEDE ET SYSTEME POUR LA GENERATION D'UNE ERREUR DE SIGNAL D'ABERRATION
SPHERIQUE

(84) Designated Contracting States:
**AT BE BG CH CY CZ DE DK EE ES FI FR GB GR
HU IE IS IT LI LT LU MC NL PL PT RO SE SI SK TR**

(30) Priority: **29.06.2004 EP 04300410**

(43) Date of publication of application:
**21.03.2007 Bulletin 2007/12**

(73) Proprietor: **Koninklijke Philips Electronics N.V.
5621 BA Eindhoven (NL)**

(72) Inventors:
• **STALLINGA, Sjoerd
F-75008 Paris (FR)**
• **VREHEN, Joris
F-75008 Paris (FR)**

(74) Representative: **Roche, Denis
Société Civile SPID,
156, Boulevard Haussmann
75008 Paris (FR)**

(56) References cited:
**US-A- 4 661 944        US-B1- 6 353 582**

**Description**

**FIELD OF THE INVENTION**

This invention relates generally to the field of optical storage systems and, more particularly, to an apparatus and method for generating a spherical aberration signal for use in a detection system for detecting a radiation beam travelling from an optical storage medium, such as an optical disc.

**BACKGROUND OF THE INVENTION**

Optical data storage systems provide a means for storing great quantities of data on an optical record carrier, such as an optical disc. The data is accessed by focussing a laser beam onto the data layer of the disc and then detecting the reflected light beam. In one known system, data is permanently embedded as marks, such as pits, in the disc, and the data is detected as a change in reflectivity as the laser beam passes over the marks.

The optical disc storage technology that employs an optical disc with pit patterns as a high-density, large-capacity recording medium has been put into practical use while expanding its applications to digital versatile discs (DVDs), video discs, document file discs and data files.

In order to improve the recording density of an optical disc further, an increase in the numerical aperture (NA) of an objective lens has been studied recently. The objective lens focuses a light beam on the optical disc to form a diffraction-limited spot. However, spherical aberration (SA), which is caused by an error in thickness of a base material for protecting a data record layer of the optical disc, increases strongly with NA. Thus, as optical storage discs increase in density and the NA of the objective lens becomes higher, the influence due to spherical aberration, arising when the cover layer of the disc deviates from the design value due to small variations in the manufacturing process of the disc or when dual layer discs are used, will increase accordingly, such that there will be distortion in the read-out signal.

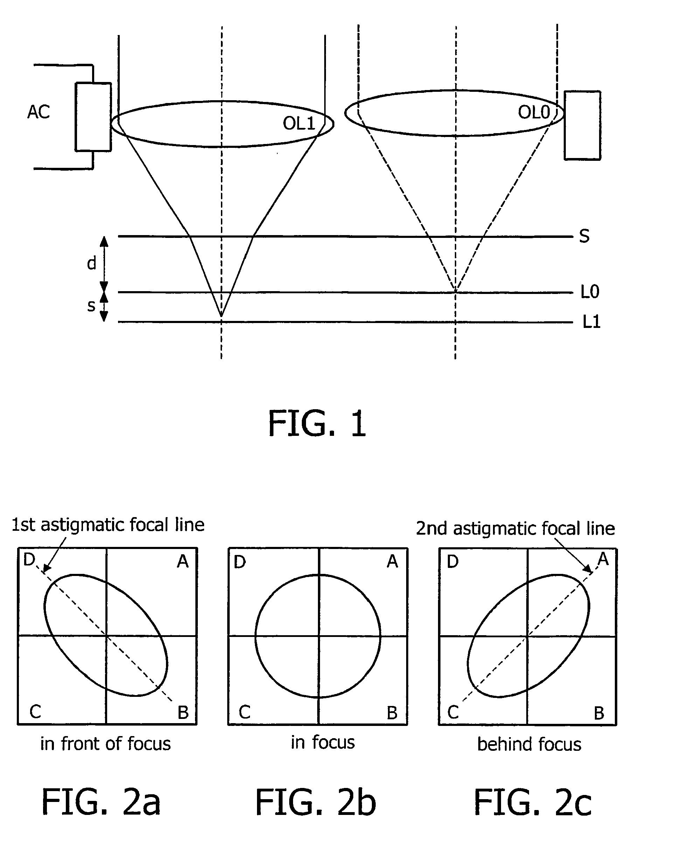

For portable applications, both the disc and the drive should be as small as possible. In order to achieve sufficient data capacity on a small disc, the use of a dual layer disc is quite favourable for this type of application. Referring to Figure 1 of the drawings, in such a disc, the first data layer L0 is located at a depth d below the entrance surface S of the disc, the second layer L1 is located at a depth d+s. The top layer, of thickness d, is called the cover layer, and the intermediate layer, of thickness s, is called the spacer layer.

For discs having only a single layer, a fixed amount of spherical aberration can be compensated for by the objective lens producing the converging cone of light, but this is not sufficient for multi-layer discs. The latter type of disc needs compensation for the spherical aberration related to focusing through the spacer layer. This may be achieved by the use of two objective lenses, each of which compensates for spherical aberration in respect of layer L0 and L1 respectively. Thus, a typical optical scanning device, in this case, may comprise two objective lenses OL0 and OL1 for compensating for spherical aberration in respect of layer L0 and L1 respectively, the objective lenses being mounted in an actuator AC, which is the part of the drive that can move in the radial and focus direction in order to keep the scanning spot on track and in focus.

In all cases, for a high-NA readout system, compensation for spherical aberration is needed in order to increase the tolerances with respect to cover layer thickness variations or when dual layer discs are used, where spherical aberration is the phenomenon whereby the rays in a converging cone of light scanning the disc that make a small angle to the optical axis (inner rays) have a different focal point to that of the rays in the converging cone that make a large angle with the optical axis (outer rays). This results in blurring of the spot and loss of fidelity in reading out the bit stream. The amount of spherical aberration that needs to be compensated for is proportional to the depth of the data layer it is focussed on, and increases strongly with NA. Although a fixed amount of spherical aberration is compensated for by the objective lens producing the cone of light, it follows that a variable amount of spherical aberration needs to be compensated for in a multi-layer disc, and such compensation can be achieved by, for example, adding a spherical aberration generating component to the light path.

Such spherical aberration compensating means requires a spherical aberration Error Signal (SAES) and such an error signal can be generated as described in, for example, US Patent No. 6,229,600 and WO 00/39792, both of which arrangements are based on comparing the Focus Error Signal (FES) of the inner rays of the beam with the FES of the outer rays of the beam, bearing in mind that spherical aberration is defined as a focus difference between the inner and outer part of the beam. A system comprising a detector for obtaining a first focus error signal dependent on radiation in a first zone in a cross-section of a radiation beam has also been described in US Patent No. 4,661,944. However, problems arise in the case of beamlanding, i.e. if the spot on the detector is replaced relative to the segments of a radiation detector, which introduces an offset in the overall FES as well as the SAES.

## OBJECT AND SUMMARY OF THE INVENTION

It is an object of the present invention to provide an improved method and system for generating a spherical aberration signal, in which the above-mentioned offset is reduced or substantially eliminated.

In accordance with a first aspect of the present invention, there is provided a system comprising :

- a detector for obtaining first focus error signal ($FES_{n,1}$) and second focus error signal ($FES_{n,2}$) dependent on radiation in first and second zones in a cross-section of a radiation beam, respectively,
- processing means for subtracting said second focus error signal ($FES_{n,2}$) to said first focus error signal ($FES_{n,1}$) so as to generate a spherical aberration signal ($SAES_n$),
- processing means for generating the second focus error signal ($FES_{n,2}$) according to formula:

$$FES_{n,2} = \alpha \left[ \frac{A_2 - B_2}{A_2 + B_2} + \frac{C_2 - D_2}{C_2 + D_2} \right]$$

wherein a is a parameter, and $A_2$, $B_2$, $C_2$ and $D_2$ comprise output signals from a plurality of radiation detection sectors located in said respective second zone.

In accordance with a second aspect of the present invention, there is provided a system comprising :

- a detector comprising an inner four-quadrants and an outer four-quadrants intended to detect a radiation in first and second zones in a cross-section of a radiation beam, respectively,
- processing means for generating a spherical aberration signal ($SAES'_n$) according to the formula:

$$SAES'_n = \alpha \left[ \frac{A_1 - A_2 - B_1 + B_2}{A_1 + A_2 + B_1 + B_2} + \frac{C_1 - C_2 - D_1 + D_2}{C_1 + C_2 + D_1 + D_2} \right]$$

wherein a is a parameter, $A_1$, $B_1$, $C_1$ and $D_1$ comprise output signals from a plurality of radiation detection sectors located in said inner zone, and $A_2$, $B_2$, $C_2$ and $D_2$ comprise output signals from a plurality of radiation detection sectors located in said outer zone.

It is also an object of the invention to provide an optical scanning device and an optical storage system using such a system and method.

Said optical scanning device comprises a radiation source for generating a scanning beam, means for focusing said scanning beam onto an information layer of an optical storage medium, a detection system comprising a plurality of detection sections for receiving a radiation beam reflected from said information layer of said optical storage medium, wherein said device further comprises a system as defined above for generating a spherical aberration signal.

The present invention extends still further to an optical storage system including an optical scanning device as defined above.

Thanks to the present invention, a spherical aberration signal is generated which is less sensitive to a non-symmetrical positioning of the light spot on the sub-detectors. Consequently, the focusing of the light spot on the record carrier by the objective lens system can be improved.

These and other aspects of the present invention will be apparent from, and elucidated with reference to, the embodiments described herein.

## BRIEF DESCRIPTION OF THE DRAWINGS

Embodiments of the present invention will now be described by way of example only and with reference to the accompanying drawings, in which:

Figure 1 is a schematic diagram illustrating an optical scanning device according to the prior art for dual layer read-out with a dual lens;

Figures 2a, 2b and 2c are schematic diagrams illustrating light distribution on a quadrant detector according to the known astigmatic focus method;

Figure 3 shows an optical beam having spherical aberration;

Figure 4a illustrates schematically an astigmatic spherical aberration detection system according to an exemplary embodiment of the present invention;

Figure 4b is a schematic diagram illustrating an eight-segment detector for generating a spherical aberration signal;

Figure 5 a is a schematic circuit diagram illustrating a system according to a first exemplary embodiment of the present invention;

Figure 5b is a schematic circuit diagram illustrating a system according to a second exemplary embodiment of the present invention; and

Figure 6 illustrates schematically detector segments in which the width of the inner segments a, the intersection of the spot rim (spot radium is taken to be 1 and the line separating the inner and outer segments defines b = (1-a$^2$)$^{0.5}$.

## DETAILED DESCRIPTION OF THE INVENTION

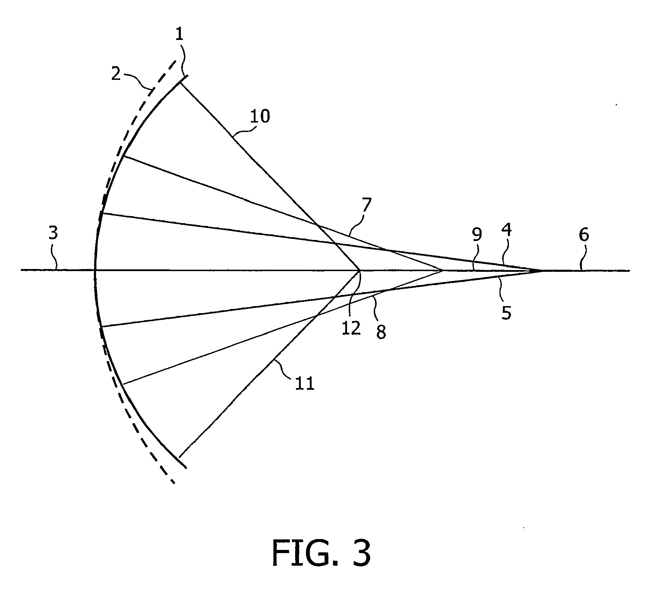

Figure 3 shows an optical beam having a spherical aberration. The wavefront of the beam is indicated by the drawn line 1. If the beam had no spherical aberration, the wavefront would be a spherical surface 2 centred on an axis 3. Paraxial rays, i.e. rays close to the axis, such as drawn rays 4, 5, come to a focus 6 on the axis. Rays further away from the axis, such as drawn rays 7, 8, come to a focus 9. Marginal rays, i.e. rays near the rim of the beam, such as the drawn rays 10, 11, come to a focus 12. A focus detection system arranged in the optical beam and capturing mainly paraxial rays of the beam will detect the focus position close to or equal to the position of paraxial focus 6. Another focus detection system arranged in the same beam and capturing instead mainly marginal rays will detect a focus position close to or equal to the marginal focus 12. The difference of the two detected foci is a measure for the sign and magnitude of the spherical aberration.

The spherical aberration of an optical beam can thus be measured by dividing the beam into a plurality of concentric zones, detecting the focus of each of the zones and determining the spherical aberration from the positions of the foci.

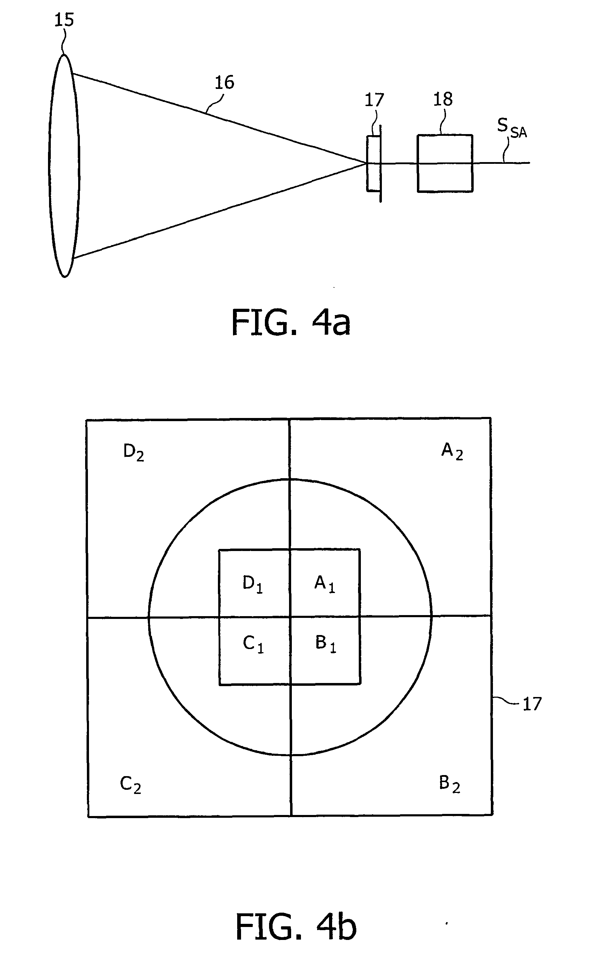

Figure 4a illustrates schematically a spherical aberration detection system according to an exemplary embodiment of the present invention. A lens 15 forms a radiation beam 16 focused on a detector 17. Beam 16 is made astigmatic by an optical element, which may be the lens 15. The electrical output signals of the detector are connected to a signal processor 18. The signal processor supplies a spherical aberration signal $S_{SA}$, the value of which represents the spherical aberration in the optical beam.

As illustrated by Figure 4b, the detector 17 has an inner quadrant detector (for detecting an inner zone of a radiation beam) comprising four adjacent sub-detectors $A_1$, $B_1$, $C_1$ and $D_1$, and an outer quadrant detector (for detecting an outer zone of a radiation beam) comprising four adjacent sub-detectors $A_2$, $B_2$, $C_2$ and $D_2$. The amount of astigmatism in beam 16 is adjusted to the size of the inner quadrant detector such that the astigmatic spot formed by the paraxial rays in beam 16 falls mainly on the inner quadrant detector, whereas a substantial amount of energy of the focal lines of the marginal rays in beam 16 fall on the outer quadrant detector.

The electrical output signals of sub-detectors $A_1$ to $D_1$, respectively are combined to form a focus error signal in respect of the paraxial rays, whereas the electrical output signals of sub-detectors $A_2$ to $D_2$, respectively are combined to form a focus error signal in respect of the marginal rays.

Basically, the inner focus error signals FES$_1$ and outer focus error signals FES$_2$ can be defined as:

$$FES_1 = \frac{A_1 - B_1 + C_1 - D_1}{A_1 + B_1 + C_1 + D_1} \qquad (0a)$$

$$FES_2 = \frac{A_2 - B_2 + C_2 - D_2}{A_2 + B_2 + C_2 + D_2} \qquad (0b)$$

and the overall focus error signal FES and the overall spherical aberration signal are derived as follows:

$$FES = FES_1 + FES_2$$

$$SAES = FES_1 - FES_2$$

The system of the present invention achieves the above-mentioned object based on the recognition of the fact that the focusing system may fail to operate correctly because the light spot formed on the detector 17 by the reflected light beam is not always positioned exactly symmetrically relative to the sub-detectors. This non-symmetrical position (also referred to as beamlanding offset) is caused, for example, by the tilting of the mirror for the radial or tangential tracking operations. As a result of this beamlanding offset, an erroneous spherical aberration signal may be derived from the output signals of the sub-detectors, so that the light beam is not focused accurately on the record carrier by the objective lens system.

According to the invention, the system for generating the spherical aberration signal is arranged and configured such that a spherical aberration signal is generated which is less sensitive to a non-symmetrical positioning of the light spot on the sub-detectors. Consequently, the focusing of the light spot on the record carrier by the objective lens system can be improved.

The beamlanding induced offset is eliminated according to the invention by independently normalising the inner focus error signal $FES_{n,1}$ and the outer focus error signal $FES_{n,2}$ as follows:

$$FES_{n,1} = \alpha \left[ \frac{A_1 - B_1}{A_1 + B_1} + \frac{C_1 - D_1}{C_1 + D_1} \right] \qquad (1a)$$

$$FES_{n,2} = \alpha \left[ \frac{A_2 - B_2}{A_2 + B_2} + \frac{C_2 - D_2}{C_2 + D_2} \right] \qquad (1b)$$

wherein a detector 17, such as that illustrated in Figure 4b, is used to obtain output signals $A_1$, $B_2$, $C_1$, $D_1$, $A_2$, $B_2$, $C_2$ and $D_2$.

The parameter $\alpha$ is advantageously set to 0.5. This has the advantage that during manufacture of the system, detector means including the radiation detection sectors may be adjusted less accurately, so that the system is cheaper to make. Moreover, with such a setting, the sensitivity of the focusing error detection system around the "in focus" condition will then be the same as that of existing reading apparatus.

The focus error signal $FES_n$ and the spherical aberration error signal $SAES_n$ are then defined as follows:

$$FES_n = FES_{n,1} + FES_{n,2}$$

$$SAES_n = FES_{n,1} - FES_{n,2}$$

$$(2)$$

In one exemplary embodiment, only the outer focus error signal $FES_{n,2}$ is normalized according to (1b). In that case, the inner focus error signal $FES_{n,1}$ may be normalized according to (0a) or a different way.

In another exemplary embodiment, so as to ensure that the beamlanding offset is entirely eliminated and further improve the focusing abilities of the objective lens system, the inner focus error signal $FES_{n,1}$ and the outer focus error signal $FES_{n,2}$ are normalized according to (1a) and (1b).

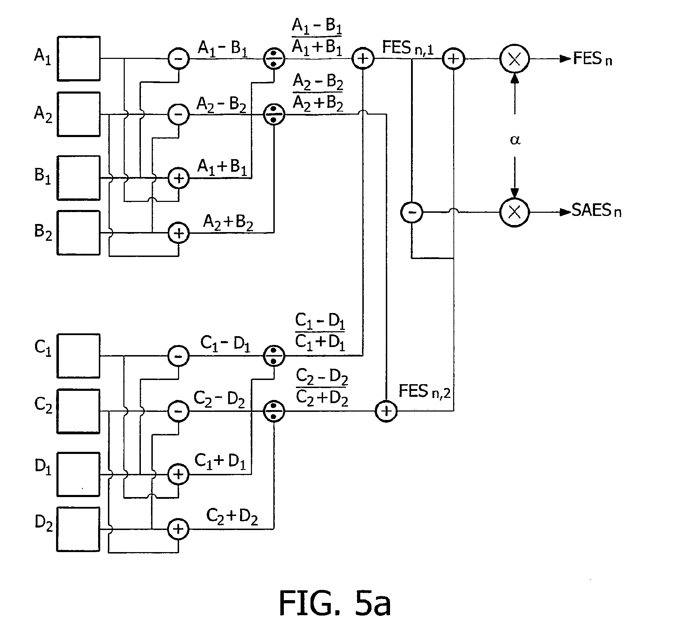

Figure 5a of the drawings illustrates schematically the implementation of (2). Means for subtracting, adding, dividing and multiplying are advantageously performed by processing means, such as a processor.

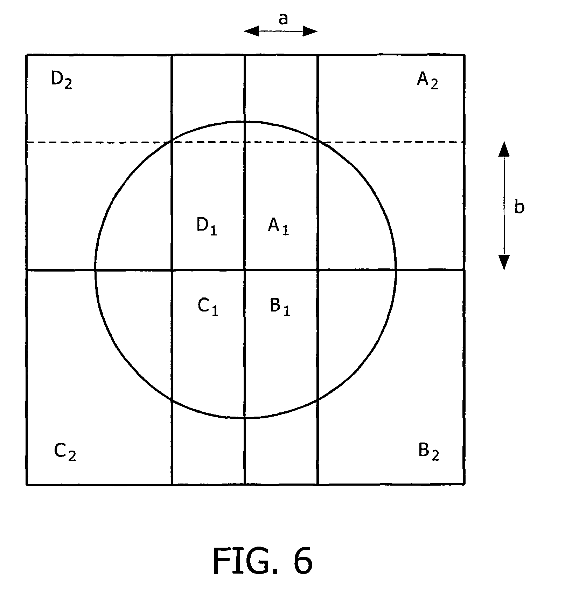

Consider now the case of an alternative detector arrangement, wherein the eight segments are shaped as shown in Figure 6, and are arranged and configured such that the width of the segments provided in respect of an inner zone is a, and the intersection b of the spot rim (i.e. the rim of the spot defined by the radiation beam) and the line separating the segments provided in respect of the inner zone from the segments provided in respect of the outer zone defines b = (1-a$^2$)$^{0.5}$. In case of beamlanding, the segments change according to:

$$A_1 \rightarrow A_1 + (1-b)\varepsilon_r + a\varepsilon_t,$$
$$A_2 \rightarrow A_2 + b\varepsilon_r + (1-a)\varepsilon_t + \varepsilon_r\varepsilon_t,$$
$$B_1 \rightarrow B_1 + (1-b)\varepsilon_r - a\varepsilon_t,$$
$$B_2 \rightarrow B_2 + b\varepsilon_r - (1-a)\varepsilon_t - \varepsilon_r\varepsilon_t,$$
$$C_1 \rightarrow C_1 - (1-b)\varepsilon_r - a\varepsilon_t,$$
$$C_2 \rightarrow C_2 - b\varepsilon_r - (1-a)\varepsilon_t + \varepsilon_r\varepsilon_t,$$
$$D_1 \rightarrow D_1 - (1-b)\varepsilon_r + a\varepsilon_t,$$
$$D_2 \rightarrow D_2 - b\varepsilon_r + (1-a)\varepsilon_t - \varepsilon_r\varepsilon_t,$$

(3)

The normalization of equations (1) also work in this case, although the offsets of the individual segments due to beamlanding are quite different.

In a second embodiment, signals from inner and outer zones are added and subtracted, then normalized in a different way compared to equations (1). The the focus error signal FES'$_n$ and the spherical aberration error signal SAES'$_n$ are thus calculated as follows:

$$FES'_n = \alpha\left[\frac{A_1 + A_2 - B_1 - B_2}{A_1 + A_2 + B_1 + B_2} + \frac{C_1 + C_2 - D_1 - D_2}{C_1 + C_2 + D_1 + D_2}\right]$$

(4)

$$SAES'_n = \alpha\left[\frac{A_1 - A_2 - B_1 + B_2}{A_1 + A_2 + B_1 + B_2} + \frac{C_1 - C_2 - D_1 + D_2}{C_1 + C_2 + D_1 + D_2}\right]$$

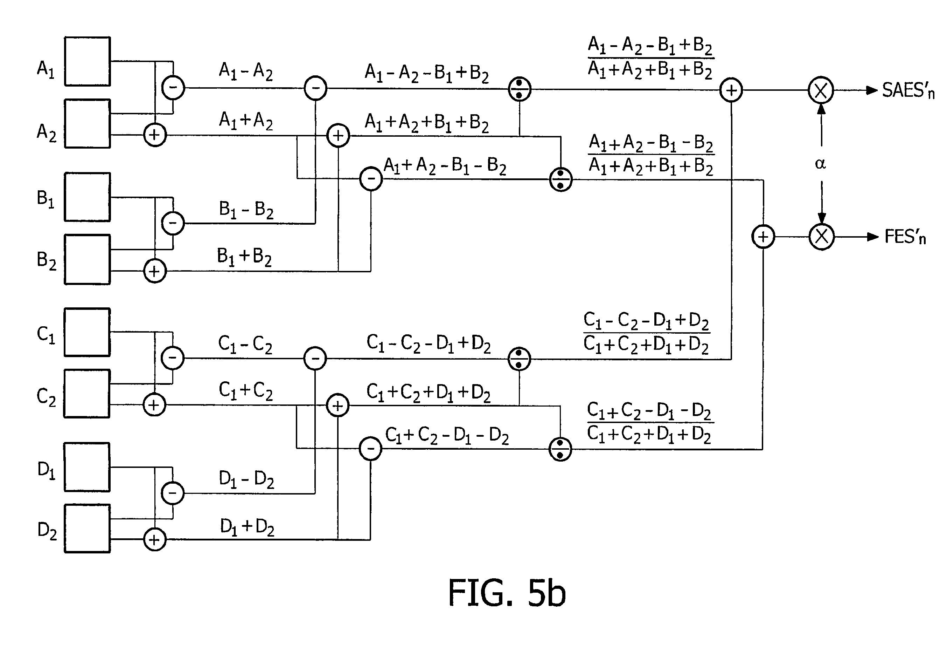

This has the same effect of eliminating the beamlanding offset, and a corresponding implementation is illustrated schematically in Figure 5b of the drawings.

Thus, in summary, the above-described exemplary embodiment of the present invention provides a method for generating a spherical aberration error signal, the spherical aberration signal being the (possibly weighted) difference between the focus error signals of the inner and outer part of the beam, wherein the inner and outer focus error signals are separately normalized according to equations (1). An embodiment in which the order of normalization and taking the difference signal is reversed is also described.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A system comprising a detector for obtaining a first focus error signal (FES$_{n,1}$) dependent on radiation in a first zone in a cross-section of a radiation beam, **characterized in that**:

- said detector is also arranged for obtaining a second focus error signal (FES$_{n,2}$) dependent on radiation in a second zone in a cross-section of said radiation beam,

and **in that** it further comprises:

- processing means for subtracting said second focus error signal (FES$_{n,2}$) to said first focus error signal (FES$_{n,1}$) so as to generate a spherical aberration signal (SAES$_n$), and
- a processing means for generating said second focus error signal (FES$_{n,2}$) according to the formula:

$$FES_{n,2} = \alpha \left[ \frac{A_2 - B_2}{A_2 + B_2} + \frac{C_2 - D_2}{C_2 + D_2} \right]$$

wherein $\alpha$ is a parameter, and A$_2$, B$_2$, C$_2$ and D$_2$ comprise output signals from a plurality of radiation detection sectors located in said second zone.

2. A system according to claim 1, further comprises processing means for defining said first focus error signal (FES$_{n,1}$) according to the formula:

$$FES_{n,1} = \alpha \left[ \frac{A_1 - B_1}{A_2 + B_2} + \frac{C_1 - D_1}{C_1 + D_1} \right]$$

wherein A$_1$, B$_1$, C$_1$ and D$_1$ comprise output signals from a plurality of radiation detection sensors located in said first zone.

3. A system according to claim 1 or 2, wherein said first and second zones comprise an inner and an outer zone relative to said cross-section of said radiation beam, the first focus error signal (FES$_{n,1}$) in respect of said inner zone being obtained from one or more first radiation detection sectors of said detector, and the second focus error signal (FES$_{n,2}$) in respect of said outer zone being obtained from one or more second radiation sectors of said detector, said one or more first radiation detection sectors being closer to the centre of said detector than said one or more second radiation detection sensors.

4. A system according to claim 1 or 2, wherein the parameter $\alpha$ equals 0.5.

5. A system according to claim 1, further comprises processing means for generating a focus error signal (FES$_n$) as being the sum of said first focus error signal (FES$_{n,1}$) and second focus error signal (FES$_{n,2}$).

6. A system comprising a detector comprising an outer four-quadrants area intended to detect a radiation in an outer zone in a cross-section of a radiation beam, **characterized in that**:

- said detector also comprises an inner four-quadrants area intended to detect a radiation in an inner zone,

and **in that** it further comprises:

- processing means for generating a spherical aberration signal (SAES'$_n$) according to the formula:

$$SAES'_n = \alpha \left[ \frac{A_1 - A_2 - B_1 + B_2}{A_1 + A_2 + B_1 + B_2} + \frac{C_1 - C_2 - D_1 + D_2}{C_1 + C_2 + D_1 + D_2} \right]$$

wherein $\alpha$ is a parameter, A$_1$, B$_1$, C$_1$ and D$_1$ comprise output signals from a plurality of radiation detection sectors

7

located in said inner zone, and $A_2$, $B_2$, $C_2$ and $D_2$ comprise output signals from a plurality of radiation detection sectors located in said outer zone.

**7.** A system according to claim 6, further comprises processing means for generating a focus error signal (FES'$_n$) according to the formula:

$$FES'_n = \alpha \left[ \frac{A_1 + A_2 - B_1 - B_2}{A_1 + A_2 + B_1 + B_2} + \frac{C_1 + C_2 - D_1 - D_2}{C_1 + C_2 + D_1 + D_2} \right]$$

**8.** A method comprising the step of obtaining a first focus error signal (FES$_{n,1}$) dependent on radiation in a first zone in a cross-section of a radiation beam, **characterized in that** it further comprises the steps of:

- obtaining a second focus error signal (FES$_{n,2}$) dependent on radiation in a second zone in a cross-section of said radiation beam,
- subtracting said second focus error signal (FES$_{n,2}$) to said first focus error signal (FES$_{n,1}$) so as to generate a spherical aberration signal (SAES$_n$),
- generating said second focus error signal (FES$_{n,2}$) according to the formula:

$$FES_{n,2} = \alpha \left[ \frac{A_2 - B_2}{A_2 + B_2} + \frac{C_2 - D_2}{C_2 + D_2} \right]$$

wherein $\alpha$ is a parameter, and $A_2$, $B_2$, $C_2$ and $D_2$ comprise output signals from a plurality of radiation detection sectors located in said respective second zone.

**9.** A method comprising the step of detecting a radiation in an outer zone in a cross-section of a radiation beam, **characterized in that** it further comprises the steps of:

- obtaining a second focus error signal (FES$_{n,2}$) dependent on radiation in a second zone in a cross-section of said radiation beam, and
- generating a spherical aberration signal (SAES'$_n$) according to the formula:

$$SAES'_n = \alpha \left[ \frac{A_1 - A_2 - B_1 + B_2}{A_1 + A_2 + B_1 + B_2} + \frac{C_1 - C_2 - D_1 + D_2}{C_1 + C_2 + D_1 + D_2} \right]$$

wherein $\alpha$ is a parameter, $A_1$, $B_1$, $C_1$ and $D_1$ comprise output signals from a plurality of radiation detection sectors located in said inner zone, and $A_2$, $B_2$, $C_2$ and $D_2$ comprise output signals from a plurality of radiation detection sectors located in said outer zone.

**10.** An optical scanning device for an optical storage system, said device comprising a radiation source for generating a scanning beam, means for focusing said scanning beam onto an information layer of an optical storage medium, a detection system comprising a plurality of detection sections for receiving a radiation beam reflected from said information layer of said optical storage medium, wherein said device further comprises a system according to claim 1 or 6 for generating a spherical aberration signal.

**11.** A optical scanning device according to claim 10, comprising an eight-segment radiation detector, wherein four adjacent detection segments are provided in respect of an inner zone and four adjacent detection segments are provided in respect of an outer zone relative to the cross-section of said radiation beam.

**12.** A optical scanning device according to claim 10, wherein the radiation detection segments are arranged and configured such that the width of the segments provided in respect of an inner concentric zone is a, and the intersection b of the spot rim and the line separating the segments provided in respect of the inner concentric zone from the segments provided in respect of the outer concentric zone defines b=(1-a$^2$)$^{0.5}$.

**13.** An optical storage system including an optical scanning device according to claim 10.

**Patentansprüche**

**1.** System mit einem Detektor zum Erhalten eines ersten Fokusfehlersignals (FES$_{n,1}$) abhängig von der Strahlung in einer ersten Zone in einem Querschnitt eines Strahlungsstrahls,
**dadurch gekennzeichnet, dass**:

- der Detektor auch zum Erhalten eines zweiten Fokusfehlersignals (FES$_{n,2}$) abhängig von der Strahlung in einer zweiten Zone in einem Querschnitt des Strahlungsstrahls angeordnet ist,
und dadurch, dass es ferner Folgendes aufweist:
- Verarbeitungsmittel zum Subtrahieren des zweiten Fokusfehlersignals (FES$_{n,2}$) von dem ersten Fokusfehlersignal (FES$_{n,1}$), um ein sphärisches Aberrationssignal (SAES$_n$) zu erzeugen, und
- ein Verarbeitungsmittel zum Erzeugen des zweiten Fokusfehlersignals (FES$_{n,2}$) gemäß der Formel:

$$FES_{n,2} = \alpha \left[ \frac{A_2 - B_2}{A_2 + B_2} + \frac{C_2 - D_2}{C_2 + D_2} \right]$$

wobei $\alpha$ ein Parameter ist und A$_2$, B$_2$, C$_2$ und D$_2$ Ausgangssignale von einer Vielzahl von Strahlungserfassungssektoren aufweisen, die in der zweiten Zone angeordnet sind.

**2.** System nach Anspruch 1, ferner aufweisend Verarbeitungsmittel zum Definieren des ersten Fokussignals (FES$_{n,1}$) gemäß der Formel

$$FES_{n,1} = \alpha \left[ \frac{A_1 - B_1}{A_1 + B_1} + \frac{C_1 - D_1}{C_1 + D_1} \right]$$

wobei A$_1$, B$_1$, C$_1$ und D$_1$ Ausgangssignale von einer Vielzahl von Strahlungserfassungssensoren umfasst, die in der ersten Zone angeordnet sind.

**3.** System nach Anspruch 1 oder 2, wobei die erste und zweite Zone eine innere und eine äußere Zone bezüglich des Querschnitts des Strahlungsstrahls aufweisen, wobei das erste Fokusfehlersignal (FES$_{n,1}$) in Bezug auf die innere Zone von einem oder mehreren ersten Strahlungserfassungssektoren des Detektors erhalten wird, und das zweite Fokusfehlersignal (FES$_{n,2}$) in Bezug auf die äußere Zone von einem oder mehreren zweiten Strahlungssektoren des Detektors erhalten wird, wobei der eine oder die mehreren ersten Strahlungserfassungssektoren sich näher zu dem Zentrum des Detektors befindet/befinden, als der eine oder die mehreren zweiten Strahlungserfassungssensoren.

**4.** System nach Anspruch 1 oder 2, wobei der Parameter von $\alpha$ gleich 0,5 ist.

**5.** System nach Anspruch 1, ferner aufweisend Verarbeitungsmittel zum Erzeugen eines Fokusfehlersignals (FES$_n$), bei dem es sich um die Summe des ersten Fokusfehlersignals (FES$_{n,1}$) und des zweiten Fokusfehlersignals (FES$_{n,2}$) handelt.

**6.** System mit einem Detektor, aufweisend einen äußeren Vierquadrantbereich, der zum Erfassen einer Strahlung in einer äußeren Zone in einem Querschnitt eines Strahlungsstrahls bestimmt ist,
**dadurch gekennzeichnet, dass**:

- der Detektor auch einen inneren Vierquadrantbereich zum Erfassen einer Strahlung in einer inneren Zone aufweist;

und dadurch, dass es ferner folgendes aufweist;

- Verarbeitungsmittel zum Erzeugen des sphärischen Aberrationssignals (SAES'$_n$) gemäß der Formel:

$$SAES'_n = \alpha \left[ \frac{A_1 - A_2 - B_1 + B_2}{A_1 + A_2 + B_1 + B_2} + \frac{C_1 - C_2 - D_1 + D_2}{C_1 + C_2 + D_1 + D_2} \right]$$

wobei $\alpha$ ein Parameter ist und $A_1$, $B_1$, $C_1$ und $D_1$ Ausgangssignale von einer Vielzahl von Strahlungserfassungssektoren aufweisen, die in der inneren Zone angeordnet sind, und $A_2$, $B_2$, $C_2$ und $D_2$ Ausgangssignale von einer Vielzahl von Strahlungserfassungssektoren aufweisen, die in der zweiten Zone angeordnet sind.

7. System nach Anspruch 6, ferner aufweisend Verarbeitungsmittel zum Erzeugen eines Fokusfehlersignals (FES'$_n$) gemäß der Formel:

$$FES'_n = \alpha \left[ \frac{A_1 + A_2 - B_1 - B_2}{A_1 + A_2 + B_1 + B_2} + \frac{C_1 + C_2 - D_1 - D_2}{C_1 + C_2 + D_1 + D_2} \right]$$

8. Verfahren, aufweisend den Schritt des Erhaltens eines ersten Fokusfehlersignals (FES$_{n,1}$) abhängig von der Strahlung in einer ersten Zone in einem Querschnitt eines Strahlungsstrahls,
**dadurch gekennzeichnet, dass** es ferner die folgenden Schritte aufweist:

- Erhalten eines zweiten Fokusfehlersignals (FES$_{n,2}$) abhängig von einer Strahlung in einer zweiten Zone in einem Querschnitt eines Strahlungsstrahls,

und dadurch, dass es ferner Folgendes aufweist:

- Subtrahieren des zweiten Fokusfehlersignals (FES$_{n,2}$) von dem ersten Fokusfehlersignal (FES$_{n,1}$), um ein sphärisches Aberrationssignal (SAES$_n$) zu erzeugen, und
- Erzeugen des zweiten Fokusfehlersignals (FES$_{n,2}$) gemäß der Formel:

$$FES_{n,2} = \alpha \left[ \frac{A_2 - B_2}{A_2 + B_2} + \frac{C_2 - D_2}{C_2 + D_2} \right]$$

wobei $\alpha$ ein Parameter ist und $A_2$, $B_2$, $C_2$ und $D_2$ Ausgangssignale von einer Vielzahl von Strahlungserfassungssektoren aufweisen, die in der zweiten Zone angeordnet sind.

9. Verfahren, aufweisend den Schritt des Erfassens einer Strahlung in einer äußeren Zone in einem Querschnitt eines Strahlungsstrahls, **dadurch gekennzeichnet, dass** es die folgenden Schritte aufweist:

- Erhalten eines zweiten Fokusfehlersignals (FES$_{n,2}$) abhängig von der Strahlung in einer zweiten Zone in einem Querschnitt des Strahlungsstrahls, und
- Erzeugen eines sphärischen Aberrationssignals (SAES'$_n$) gemäß der Formel:

$$SAES_n = \alpha \left[ \frac{A_1 - A_2 - B_1 + B_2}{A_1 + A_2 + B_1 + B_2} + \frac{C_1 - C_2 - D_1 + D_2}{C_1 + C_2 + D_1 + D_2} \right]$$

wobei $\alpha$ ein Parameter ist und $A_1$, $B_1$, $C_1$ und $D_1$ Ausgangssignale von einer Vielzahl von Strahlungserfassungssektoren aufweisen, die in der inneren Zone angeordnet sind, und $A_2$, $B_2$, $C_2$ und $D_2$ Ausgangssignale von einer Vielzahl von Strahlungserfassungssektoren aufweisen, die in der zweiten Zone angeordnet sind.

10. Optische Scanvorrichtung für ein optisches Speichersystem, wobei die Vorrichtung eine Strahlungsquelle zum Erzeugen eines Scanstrahls, Mittel zum Fokussieren des Scanstrahls auf eine Informationsschicht eines optischen Speichermediums, ein Erfassungssystem, aufweisend eine Vielzahl von Erfassungsabschnitten zum Empfangen eines von der Informationsschicht des optischen Speichermediums reflektierten Strahlungsstrahls, aufweist, wobei die Vorrichtung ferner ein System nach Anspruch 1 oder 6 zum Erzeugen eines sphärischen Aberrationssignal aufweist.

11. Optische Scanvorrichtung nach Anspruch 10, aufweisend einen Strahlungsdetektor mit acht Segmenten, wobei vier angrenzende Erfassungssegmente in Bezug auf eine innere Zone und vier angrenzende Erfassungssegmente in Bezug auf eine äußere Zone bezüglich des Querschnitts des Strahlungsstrahls vorgesehen sind.

12. Optische Scanvorrichtung nach Anspruch 10, wobei die Strahlungserfassungssegmente so angeordnet und konfiguriert sind, dass die Breite der Segmente, die in Bezug auf eine innere konzentrischen Zone bereitgestellt sind, a ist und der Schnittpunkt b des Punkttrandes mit der Linie, die die Segmente, welche in Bezug auf die innere konzentrische Zone bereitgestellt sind, von den Segmenten trennt, die in Bezug auf die äußere konzentrische Zone bereitgestellt sind, $b=(1-a^2)^{0,5}$ definiert.

13. Optisches Speichersystem mit einer optischen Scanvorrichtung nach Anspruch 10.

**Revendications**

1. Système comprenant un détecteur permettant d'obtenir un premier signal d'erreur de focalisation ($FES_{n,1}$) dépendant du rayonnement dans une première zone dans une coupe transversale d'un faisceau de rayonnement, **caractérisé en ce que**:

   - ledit détecteur est également aménagé pour obtenir un deuxième signal d'erreur de focalisation ($FES_{n,2}$) dépendant du rayonnement dans une deuxième zone dans une coupe transversale dudit faisceau de rayonnement, et **en ce qu'**il comprend de plus:

   - des moyens de traitement pour soustraire ledit deuxième signal d'erreur de focalisation ($FES_{n,2}$) dudit premier signal d'erreur de focalisation ($FES_{n,1}$) de façon à générer un signal d'aberration sphérique ($SAES_n$), et
   - un moyen de traitement pour générer ledit deuxième signal d'erreur de focalisation ($FES_{n,2}$) selon la formule:

$$FES_{n,2} = \alpha \left[ \frac{A_2 - B_2}{A_2 + B_2} + \frac{C_2 - D_2}{C_2 + D_2} \right]$$

   dans laquelle $\alpha$ est un paramètre, et $A_2$, $B_2$, $C_2$ et $D_2$ comprennent des signaux de sorties à partir d'une pluralité de secteurs de détection de rayonnement situés dans ladite deuxième zone.

2. Système selon la revendication 1, comprenant de plus des moyens de traitement pour définir ledit premier signal d'erreur de focalisation ($FES_{n,1}$) selon la formule:

$$FES_{n,1} = \alpha\left[\frac{A_1 - B_1}{A_2 + B_2} + \frac{C_1 - D_1}{C_1 + D_1}\right]$$

dans laquelle $A_1$, $B_1$, $C_1$ et $D_1$ comprennent des signaux de sortie à partir d'une pluralité de capteurs de détection de rayonnement situés dans ladite première zone.

**3.** Système selon la revendication 1 ou 2, dans lequel lesdites première et deuxième zones comprennent une zone intérieure et une zone extérieure par rapport à ladite coupe transversale dudit faisceau de rayonnement, le premier signal d'erreur de focalisation ($FES_{n,1}$) par rapport à ladite zone intérieure étant obtenu d'un ou de plusieurs premiers secteurs de détection de radiation dudit détecteur, et le deuxième signal d'erreur de focalisation ($FES_{n,2}$) par rapport à ladite zone extérieure étant obtenu à partir d'un ou de plusieurs deuxièmes secteurs de rayonnement dudit détecteur, lesdits un ou plusieurs premiers secteurs de détection de rayonnement étant plus proches du centre dudit détecteur que lesdits un ou plusieurs deuxièmes capteurs de détection de rayonnement.

**4.** Système selon la revendication 1 ou 2, dans lequel le paramètre $\alpha$ est égal à 0,5.

**5.** Système selon la revendication 1, comprenant de plus des moyens de traitement pour générer un signal d'erreur de focalisation ($FES_n$) valant la somme desdits premier signal d'erreur de focalisation ($FES_{n,1}$) et deuxième signal d'erreur de focalisation ($FES_{n,2}$).

**6.** Système comprenant un détecteur comprenant une zone à quatre cadrans extérieure conçue pour détecter un rayonnement dans une zone extérieure d'une coupe transversale d'un faisceau de rayonnement, **caractérisé en ce que**:

- ledit détecteur comprend également une zone à quatre cadrans intérieure conçue pour détecter un rayonnement dans une zone intérieure,

et **en ce qu'**il comprend de plus:

- des moyens de traitement pour générer un signal d'aberration sphérique ($SAES'_n$) selon la formule:

$$SAES'_n = \alpha\left[\frac{A_1 - A_2 - B_1 + B_2}{A_1 + A_2 + B_1 + B_2} + \frac{C_1 - C_2 - D_1 + D_2}{C_1 + C_2 + D_1 + D_2}\right]$$

dans laquelle $\alpha$ est un paramètre, $A_1$, $B_1$, $C_1$ et $D_1$ comprennent des signaux de sortie à partir d'une pluralité de secteurs de détection de rayonnement situés dans ladite zone intérieure, et $A_2$, $B_2$, $C_2$ et $D_2$ comprennent des signaux de sortie à partir d'une pluralité de secteurs de détection de rayonnement situés dans ladite zone extérieure.

**7.** Système selon la revendication 6, comprenant de plus des moyens de traitement pour générer un signal d'erreur de focalisation ($FES'_n$) selon la formule:

$$FES'_n = \alpha\left[\frac{A_1 + A_2 - B_1 - B_2}{A_1 + A_2 + B_1 + B_2} + \frac{C_1 + C_2 - D_1 - D_2}{C_1 + C_2 + D_1 + D_2}\right]$$

**8.** Procédé comprenant l'étape d'obtention d'un premier signal d'erreur de focalisation ($FES_{n,1}$) dépendant du rayonnement dans une première zone dans une coupe transversale d'un faisceau de rayonnement, **caractérisé en ce qu'**il comprend de plus les étapes suivantes:

- obtention d'un deuxième signal d'erreur de focalisation ($FES_{n,2}$) dépendant du rayonnement dans une deuxième zone dans une coupe transversale dudit faisceau de rayonnement,
- soustraction dudit deuxième signal d'erreur de focalisation ($FES_{n,2}$) dudit premier signal d'erreur de focalisation

**12**

(FES$_{n,1}$) de façon à générer un signal d'aberration sphérique (SAES$_n$),
- génération dudit deuxième signal d'erreur de focalisation (FES$_{n,2}$) selon la formule:

$$FES_{n,2} = \alpha\left[\frac{A_2 - B_2}{A_2 + B_2} + \frac{C_2 - D_2}{C_2 + D_2}\right]$$

dans laquelle $\alpha$ est un paramètre, et A$_2$, B$_2$, C$_2$ et D$_2$ comprennent des signaux de sortie à partir d'une pluralité de secteurs de détection de rayonnement situés dans ladite deuxième zone respective.

9. Procédé comprenant l'étape de détection d'un rayonnement dans une zone extérieure dans une coupe transversale d'un faisceau de rayonnement, **caractérisé en ce qu'**il comprend de plus les étapes suivantes:

- obtention d'un deuxième signal d'erreur de focalisation (FES$_{n,2}$) dépendant du rayonnement dans une deuxième zone dans une coupe transversale dudit faisceau de rayonnement, et
- génération d'un signal d'aberration sphérique (SAES'$_n$), selon la formule:

$$SAES'_n = \alpha\left[\frac{A_1 - A_2 - B_1 + B_2}{A_1 + A_2 + B_1 + B_2} + \frac{C_1 - C_2 - D_1 + D_2}{C_1 + C_2 + D_1 + D_2}\right]$$

dans laquelle $\alpha$ est un paramètre, A$_1$, B$_1$, C$_1$ et D$_1$ comprennent des signaux de sortie à partir d'une pluralité de secteurs de détection de rayonnement situés dans ladite zone intérieure, et A$_2$, B$_2$, C$_2$ et D$_2$ comprennent des signaux de sortie à partir d'une pluralité de secteurs de détection de rayonnement situés dans ladite zone extérieure.

10. Dispositif de balayage optique conçu pour un système de stockage optique, ledit dispositif comprenant une source de rayonnement permettant de générer un faisceau de balayage, des moyens pour focaliser ledit faisceau de balayage sur une couche d'informations d'un support de stockage optique, un système de détection comprenant une pluralité de sections de détection permettant de recevoir un faisceau de rayonnement réfléchi à partir de ladite couche d'informations dudit support de stockage optique, dans lequel ledit dispositif comprend de plus un système selon la revendication 1 ou 6 permettant de générer un signal d'aberration sphérique.

11. Dispositif de balayage optique selon la revendication 10, comprenant un détecteur de rayonnement à huit segments, dans lequel quatre segments de détection adjacents sont réalisés par rapport à une zone intérieure et quatre segments de détection adjacents sont réalisés par rapport à une zone extérieure relative à la coupe transversale dudit faisceau de rayonnement.

12. Dispositif de balayage optique selon la revendication 10, dans lequel les segments de détection de rayonnement sont aménagés et configurés de sorte que la largeur des segments réalisés par rapport à une zone concentrique intérieure est a, et l'intersection b du pourtour de spot avec la ligne séparant les segments réalisés par rapport à la zone concentrique intérieure à partir des segments réalisés par rapport à la zone concentrique extérieure définit b $(1-a^2)^{0,5}$.

13. Système de stockage optique incluant un dispositif de balayage optique selon la revendication 10.

FIG. 1

1st astigmatic focal line                    2nd astigmatic focal line

in front of focus            in focus            behind focus

FIG. 2a            FIG. 2b            FIG. 2c

# FIG. 3

FIG. 4a

FIG. 4b

$A_1$

$A_2$

$B_1$

$B_2$

$-$   $A_1 - B_1$   $\div$   $\dfrac{A_1 - B_1}{A_1 + B_1}$   $+$   FES$_{n,1}$   $+$   $\times$   FES$_n$

$-$   $A_2 - B_2$   $\div$   $\dfrac{A_2 - B_2}{A_2 + B_2}$

$+$   $A_1 + B_1$

$+$   $A_2 + B_2$

$\alpha$

$-$   $\times$   SAES$_n$

$C_1$

$C_2$

$D_1$

$D_2$

$-$   $C_1 - D_1$   $\div$   $\dfrac{C_1 - D_1}{C_1 + D_1}$

$-$   $C_2 - D_2$   $\div$   $\dfrac{C_2 - D_2}{C_2 + D_2}$   $+$   FES$_{n,2}$

$+$   $C_1 + D_1$

$+$   $C_2 + D_2$

# FIG. 5a

FIG. 5b

FIG. 6

**EP 1 763 876 B1**

### Patent documents cited in the description

- US 6229600 B
- WO 0039792 A
- US 4661944 A